# EUROPÄISCHE PATENTANMELDUNG

(11) **EP 3 214 736 A1**
(43) Veröffentlichungstag der Anmeldung: **06.09.2017**
(21) Anmeldenummer: 17153676.6
(22) Anmeldetag: 30.01.2017
(51) Int. Cl.: H02K 3/44, H02K 9/197, H02K 3/24

(54) **ELEKTRISCHE MASCHINE FÜR EIN KRAFTFAHRZEUG, SPULENTRÄGER FÜR EINE ELEKTRISCHE MASCHINE UND KRAFTFAHRZEUG**

(30) Priorität: 17.02.2016 DE 102016001838
(71) Anmelder: Audi AG, 85045 Ingolstadt (DE)
(72) Erfinder: Juris, Peter, 85057 Ingolstadt (DE)

(57) **Zusammenfassung**

Elektrische Maschine für ein Kraftfahrzeug, umfassend einen Rotor (3) und einen Stator (2) mit einem Blechpaket (8) und wenigstens einer mehrere Statorspulen (14) aufweisenden Spulenanordnung (15), wobei ein von einem Kühlfluid durchströmbarer Spulenträger (6) vorgesehen ist, in welchem die Spulenanordnung (15) angeordnet ist und der gegenüber dem Blechpaket (8) und dem Rotor (3) flüssigkeitsdicht gekapselt ist.

## Beschreibung

Die Erfindung betrifft eine elektrische Maschine für ein Kraftfahrzeug, umfassend einen Rotor und einen Stator mit einem Blechpaket und wenigstens einer mehrere Statorspulen aufweisenden Spulenanordnung.

Derartige elektrische Maschinen sollen, insbesondere bei ihrem Einsatz zum Antrieb eines Kraftfahrzeugs, eine möglichst hohe Drehmoment- bzw. Leistungsdichte aufweisen, wodurch jedoch hohe Stromdichten innerhalb der Statorspulen auftreten. Auf die dabei entstehenden Stromwärmeverluste ist ein Hauptteil der Gesamtverluste der elektrischen Maschine zurückzuführen. Insofern sind Aspekte der thermischen Belastbarkeit solcher hochausgenutzten elektrischen Maschinen in den Fokus industrieller Entwicklungsbemühungen gerückt. Da auch die Eigenschaften der für die Fertigung der elektrischen Maschine genutzten Materialien in erheblichem Maße temperaturabhängig sind, existieren bereits mehrere Ansätze für eine Kühlstrategie, um sowohl die angestrebte elektromagnetische Funktion als auch thermische und mechanische Anforderungen zu erfüllen.

Es ist bekannt, den Stator samt seiner Statorspulen von einer Kühlflüssigkeit durchströmen zu lassen. Dabei wird die Kühlflüssigkeit entlang von Nuten des Blechpaket geführt und kann entweder durch Zwischenräume zwischen mehreren Statorspulen in einer Nut oder durch speziell vorgesehene Aussparungen in den einzelnen Statorspulen strömen. Der Stator wird dabei gegenüber dem Rotor durch eine vollständig in Umfangs- und Axialrichtung umlaufende Dichtung abgeschlossen, was jedoch negative Einflüsse auf das elektromagnetische Verhalten der elektrischen Maschine durch Vergrößerung ihres Luftspalts nach sich zieht.

Die US 2012/0248904 A1 offenbart eine flüssigkeitsgekühlte Stator- und Rotoranordnung für einen elektrischen Motor oder Generator, wobei ein einen Statorkern und eine Vielzahl von Wicklungen aufweisender Stator in einer Statorausnehmung eines Gehäuses befestigt ist. Um die Statorausnehmung gegenüber dem Rotor abzuschließen, weist der Statorkern mehrere in den Nuten angeordnete Abstandshalter und gehäuseseitige Endringe auf.

Bei derartigen elektrischen Maschinen steht das metallische Blechpaket in Kontakt mit dem Kühlfluid. Sie weisen mithin den Nachteil auf, dass sie nur für bestimmte Kühlfluide geeignet sind, die keine korrosive Wirkung auf das Blechpaket haben, mit dem sie in Kontakt stehen. Die Kühlung mittels besonders effizienter Kühlfluide ist daher nicht möglich.

Der Erfindung liegt mithin die Aufgabe zugrunde, eine Möglichkeit zur verbesserten Kühlung einer elektrischen Maschine für ein Kraftfahrzeug anzugeben.

Diese Aufgabe wird bei einer elektrischen Maschine der eingangs genannten Art erfindungsgemäß dadurch gelöst, dass ein von einem Kühlfluid durchströmbarer Spulenträger vorgesehen ist, in welchem die Spulenanordnung angeordnet und der gegenüber dem Blechpaket und dem Rotor flüssigkeitsdicht gekapselt ist.

Die Erfindung beruht auf der Überlegung, zur direkten Kühlung der Statorspulen sowohl den Rotor als auch das Blechpaket nicht mit dem Kühlfluid in Berührung kommen zu lassen und dazu die Spulenanordnung nicht unmittelbar in Nuten des Blechpaket anzuordnen, sondern in dem zusätzlich vorgesehenen Spulenträger. Der Spulenträger ist ein von einem Kühlfluid durchströmbarer Hohlkörper, in welchem mehrere Spulenaufnahmeräume zur Anordnung jeweils einer Statorspule einer Spulenanordnung ausgebildet sind. Die Spulenaufnahmeräume können insbesondere derart beschaffen sein, dass sie die Statorspulen in einer Position halten, in welcher sie mit dem Rotor zur Erzeugung einer magnetmotorischen Kraft wechselwirken. Unter dem Begriff "kapseln" ist insbesondere zu verstehen, dass der Spurenträger in sich geschlossen ist, wobei jedoch Öffnungen für die Zuführung des Kühlfluide oder für eine elektrische Verbindung der Spulen nach außen vorgesehen sein können. Als Kühlfluid wird bevorzugt ein Öl, Wasser, ein Ester oder ein spezielles Kältemittel, das auch korrosiv auf das Blechpaket wirken kann, verwendet. Selbstverständlich ist auch der Einsatz gasförmiger Kühlfluide denkbar, wobei die Spulenanordnung dann zweckmäßigerweise auch gasdicht gekapselt ist. Der Rotor der elektrischen Maschine kann sowohl als Außenläufer als auch bevorzugt als Innenläufer ausgebildet sein.

Die erfindungsgemäße Maschine ermöglicht vorteilhafterweise die Verwendung eines breiteren Spektrums von Kühlfluiden, da durch die flüssigkeitsdichte Kapselung weder ein Kontakt des Kühlfluids mit dem Rotor noch mit dem Stator möglich ist. So können bei herkömmlichen Maschinen nicht verwendbare, besonders effiziente Kühlfluide zum Einsatz kommen.

Es wird bei der erfindungsgemäßen elektrischen Maschine besonders bevorzugt, wenn das Blechpaket mehrere Zähne aufweist, wobei der Spulenträger mehrere durch Wandungen begrenzte Durchgangsöffnungen aufweist, welche von den Zähnen durchsetzt sind. Als Zähne werden dabei von einem Statorkern oder Statorjoch abstehende Teile des Blechpakets aufgefasst, die die zur Aufnahme der Spulenanordnung vorgesehenen Nuten ausbilden. Mithin wird durch die Zähne der von den Statorspulen erzeugte magnetische Fluss in Richtung des Rotors geführt. Die Zähne schließen dabei zweckmäßigerweise bündig mit einer dem Rotor zugewandten Außenfläche des Spulenträgers ab, so dass keine Aufweitung eines Luftspalts zwischen dem Stator und dem Rotor entsteht. Die Durchgangsöffnungen sind vorteilhafterweise gegengleich zu den Zähnen ausgebildet. Die Zähne sind bevorzugt derart beschaffen, dass sie parallelflankige Nuten ausbilden, um ein Einsetzen des Spulenträgers auf das Blechpaket zu vereinfachen.

Bei einer solchen elektrischen Maschine kann zudem vorgesehen sein, dass zwischen den Wandungen ausgebildete Strömungskanäle im Inneren des Spulenträgers jeweils in axialer Richtung vom Kühlfluid durchströmbar sind.

Die Strömungskanäle erstrecken sich mithin parallel zu den Zähnen entlang der Drehachse des Rotors und bilden quasi eine Rippenstruktur des Spulenträgers. Die Abstände zwischen den Zähnen bzw. die Querschnittsflächen der Strömungskanäle sind dabei so gewählt, dass für eine wirksame elektromagnetische Isolation der Spulen erforderliche Mindestabstände eingehalten werden.

In Weiterbildung der zuvor beschriebenen elektrischen Maschine kann des Weiteren vorgesehen sein, dass wenigstens ein Strömungskanal mittels einer sich in axialer und radialer Richtung erstreckenden Schottwand aufgeteilt ist. Aus den Mindestabständen resultieren typischerweise Querschnittsflächen der Strömungskanäle, die nur geringe Strömungsgeschwindigkeiten des Kühlfluids zulassen. Es wird daher vorgeschlagen, die Strömungskanäle mittels einer oder mehrerer Schottwände in Teilströmungskanäle aufzuteilen und somit höhere Strömungsgeschwindigkeit für das Kühlfluid zu ermöglichen.

Um die hydrodynamischen Eigenschaften der Strömungskanäle weiter zu verbessern kann zusätzlich vorgesehen sein, dass die Schottwand wenigstens ein Mittel zur Erzeugung einer Turbulenz des durchströmenden Kühlfluids aufweist. Nachdem erkannt wurde, dass je nach axialer Länge der elektrischen Maschine die Strömung ab einer gewissen Strecke nach dem Eintritt in den Strömungskanal hydrodynamisch und thermisch eingelaufen ist, wird vorgeschlagen durch die Mittel zur Erzeugung der Turbulenz Verwirbelungen innerhalb des Strömungskanal zu erzeugen. Die Strömung weist dadurch eine höhere Nußelt-Zahl auf und bewirkt folglich einen höheren Wärmeübertragungskoeffizienten. Das Mittel zur Erzeugung der Turbulenz kann insbesondere durch kerbenartige, wellenartige, eingebuchtete oder zickzackförmige Strukturen der Schottwand ausgebildet sein.

Bei der das Zähne aufweisende Blechpaket umfassenden elektrischen Maschine ist es zudem möglich, dass die Zähne in das Blechpaket einsetzbar ausgebildet und in diesem befestigt sind. Dadurch kann bei der Fertigung der elektrischen Maschine zunächst der Spulenträger am Blechpaket angeordnet werden, wobei anschließend die Zähne durch den Spulenträger in das Blechpaket eingesetzt werden. Die elektrische Maschine kann somit auch mit Zähnen ausgestattet werden, die bei fester Anordnung am Blechpaket nicht durch die Durchgangsöffnung durchführbar sind. Mit besonderem Vorteil kann so auch ein Blechpaket mit parallelflankigen Zähnen oder mit Zahnköpfen bei der elektrischen Maschine realisiert werden.

Es ist bei der erfindungsgemäßen elektrischen Maschine besonders zweckmäßig, wenn der Spulenträger eine Zuleitung und eine Ableitung für das Kühlfluid aufweist. Diese können beispielsweise jeweils als eine Öffnung in einer Außenwand des Spulenträgers ausgebildet sein, an die eine Schlauchleitung anschließbar ist. Bevorzugt sind die Zuleitung und die Ableitung an einer Stirnfläche des Spulenträgers vorgesehen. Ebenso kann der Spulenträger eine flüssigkeitsdicht abgedichtete Öffnung, in welcher eine elektrische Zuführung für die Spulenanordnung angeordnet sein kann, aufweisen.

Des Weiteren kann bei der erfindungsgemäßen elektrischen Maschine vorgesehen sein, dass der Spulenträger mehrere gegeneinander flüssigkeitsdicht gekapselte, ringssegmentförmige Spulenträgersegmente aufweist, in welchen jeweils eine von mehreren vorgesehenen Spulenanordnungen angeordnet ist. Die Spulenträgersegmente können sich in axialer Richtung erstrecken und eine ringssegmentförmige Querschnittsfläche aufweisen. Insbesondere umfasst ein Spulenträgersegment mehrere Strömungskanäle. Bei der Fertigung einer elektrischen Maschine mit einem als Innenläufer ausgebildeten Rotor können die Spulenträgersegmente so von innen in den Stator, insbesondere auf die Zähne seines Blechpaket, eingesetzt werden, wonach der Rotor in die elektrische Maschine eingesetzt wird. Dabei sind selbstverständlich ausreichende Abstände zwischen den Spulenträgersegmenten und bevorzugt parallelflanige Nuten vorzusehen. Ist der Rotor hingegen als Ausläufer vorgesehen, können die Spulenträgersegmente entsprechend von außen auf den Stator aufgesetzt werden. Grundsätzlich sollen ausreichend bemessene Abstände zwischen den Spulenträgersegmenten vorgesehen sein, so dass diese in Abhängigkeit des Durchmessers des Blechpakets ohne Verkanten am Blechpakets anordenbar sind.

Eine weitere Möglichkeit zur Anordnung des Spulenträgers in der erfindungsgemäßen elektrischen Maschine ergibt sich dadurch, dass das Blechpaket aus mehreren ringsegmentförmigen Blechpaketsegmenten besteht. Mit anderen Worten ist das Blechpaket mehrteilig ausgebildet, so dass beispielsweise die Blechpaketsegmente auf oder in einen einteiligen, also nicht aus Spulenträgersegmenten bestehenden, Spulenträger zur Fertigung der elektrischen Maschine setzbar sind. Die Blechpaketsegmente können selbstverständlich nach der Anordnung des Spulenträgers lösbar oder unlösbar miteinander verbunden und zum Blechpaket zusammengefügt werden.

Bei der Spulenträgersegmente und Blechpaketsegmente aufweisen elektrischen Maschine ist es zum einen möglich, dass die Spulenträgersegmente deckungsgleich mit den Blechpaketsegmenten am Stator angeordnet sind. D.h., dass jedem Blechpaketsegmente ein Spulenträgersegment zugeordnet ist, wobei diese überlappungsfrei zueinander angeordnet sind. Es ist bei der Spulenträgersegmente und Blechpaketsegmente aufweisenden elektrischen Maschine aber auch möglich, dass die Spulenträgersegmente in Umfangsrichtung versetzt zu den Blechpaketsegmenten am Stator angeordnet sind. Es ist mithin ein Überlapp zwischen wenigstens einem Spulenträgersegment und mehreren Blechpaketsegmenten bzw. zwischen wenigstens einem Blechpaketsegment und mehreren Spulenträgersegmenten vorgesehen.

Um eine einfache Anordnung der Statorspulen im Spulenträger zu ermöglichen, wird es bei der erfindungsgemäßen elektrischen Maschine schließlich bevorzugt, wenn der Spulenträger oder ein jeweiliges Spulenträgersegment mehrteilig mit einer Außenwand und einem zur Seite der Außenwand offenen Grundkörper ausgebildet ist, wobei die Außenwand den Grundkörper abschließt und an diesem befestigt ist. Das Befestigen erfolgt bevorzugt durch ein an das Material des Spulenträgers angepasstes Fügeverfahren. Dabei bietet es sich an, dass sich die Außenwand in axialer Richtung und in Umfangsrichtung erstreckt, also bei einem Durchgangsöffnungen aufweisenden Spulenträger entsprechende Ausnehmungen für die Durchgangsöffnungen umfasst. Der Grundkörper kann in diesem Fall als Wanne erachtet werden.

Es ist alternativ aber auch denkbar, dass eine stirnseitige Außenwand zur Befestigung am Grundkörper vorgesehen ist, was zwar eine etwas aufwändigere Anordnung der Spulen im Spulenträger erfordert, jedoch ein besonders einfaches Verfügen von Grundkörper und Außenwand mit nur einer umlaufenden Fügenaht ermöglicht.

Daneben betrifft die Erfindung einen Spulenträger für eine erfindungsgemäße elektrische Maschine. Dieser zeichnet sich dadurch aus, dass der Spulenträger ein von einem Kühlfluid durchströmbarer Hohlkörper ist, in welchem mehrere Spulenaufnahmeräume zur Anordnung jeweils wenigstens einer Statorspule einer Spulenanordnung der elektrischen Maschine ausgebildet sind, wobei der Hohlkörper zur flüssigkeitsschichten Kapselung der Spulenanordnungen gegenüber dem Blechpaket und dem Rotor ausgebildet ist.

Es wird bei dem erfindungsgemäßen Spulenträger bevorzugt, wenn dieser mehrere durch Wandungen begrenzte Durchgangsöffnungen aufweist, welche von Zähnen der elektrischen Maschine durchsetzbar sind.

Bei dem zuvor beschriebenen Spulenträger kann zudem vorgesehen sein, dass zwischen den Wandungen ausgebildete Strömungskanäle im Inneren des Spulenträgers jeweils in axialer Richtung vom Kühlfluid durchströmbar sind.

In Weiterbildung des zuvor genannten Spulenträgers kann vorgesehen sein, dass wenigstens ein Strömungskanal mittels einer sich in axialer und radialer Richtung erstreckenden Schottwand aufgeteilt ist.

Zur Verbesserung der hydrodynamischen Eigenschaften kann bei einem solchen Spulenträgers zudem vorgesehen sein, dass die Schottwand wenigstens ein Mittel zur Erzeugung einer Turbulenz des durchströmenden Kühlfluids aufweist.

Bei dem erfindungsgemäßen Spulenträgers wird es bevorzugt, wenn eine Zuleitung und eine Ableitung für das Kühlfluid und/oder eine flüssigkeitsdicht abgedichtete Öffnung, in welcher eine elektrische Zuführung für die Spulenanordnung anordenbar ist, vorgesehen sind.

Schließlich ist es bei dem erfindungsgemäßen Spulenträger von besonderem Vorteil, wenn dieser mehrteilig mit einer Außenwand und einem zur Seite der Außenwand offenen Grundkörper ausgebildet ist, wobei die Außenwand am Grundkörper befestigbar ist.

Daneben betrifft die Erfindung auch ein Kraftfahrzeug, umfassend eine erfindungsgemäße elektrische Maschine. Die elektrische Maschine kann insbesondere zum zumindest zeitweisen und/oder zumindest unterstützenden Antreiben des Kraftfahrzeugs ausgebildet sein.

Sämtliche Ausführungen zur erfindungsgemäßen elektrischen Maschine lassen sich analog auf den erfindungsgemäßen Spulenträger und das erfindungsgemäße Kraftfahrzeug übertragen, so dass auch mit diesen die zuvor genannten Vorteile erzielt werden können.

Weitere Einzelheiten und Vorteile der Erfindung ergeben sich aus den im Folgenden beschriebenen Ausführungsbeispielen sowie anhand der Zeichnungen. Diese sind schematische Darstellungen und zeigen:
- Fig. 1: eine Prinzipdarstellung einer erfindungsgemäßen elektrischen Maschine im Querschnitt;
- Fig. 2: eine perspektivische Darstellung eines Stators der in Fig. 1 gezeigten elektrischen Maschine mit einem erfindungsgemäßen Spulenträger;
- Fig. 3: eine perspektivische Darstellung eines Spulenträgersegments der in Fig. 1 gezeigten elektrischen Maschine;
- Fig. 4: eine perspektivische Darstellung eines Grundkörpers des in Fig. 3 gezeigten Spulenträgersegments;
- Fig. 5: eine perspektivische Darstellung einer weiteren erfindungsgemäßen Ausgestaltung einer Schottwand des in Fig. 3 gezeigten Spulenträgersegments; und
- Fig. 6: eine Prinzipdarstellung eines erfindungsgemäßen Kraftfahrzeugs.

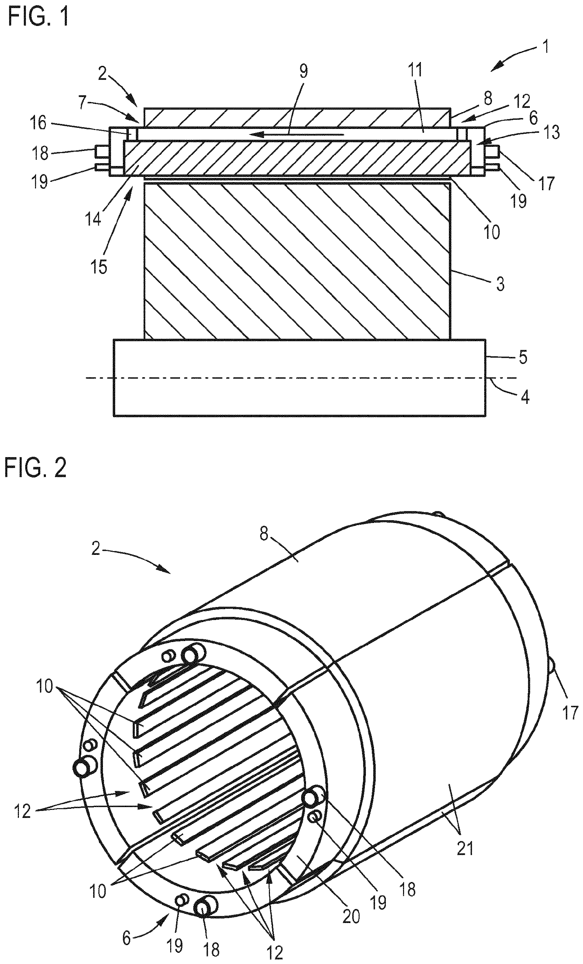

Fig. 1 zeigt eine Prinzipdarstellung einer elektrischen Maschine 1, umfassend einen Stator 2, und einen Rotor 3, der mit einer sich um eine Drehachse 4 drehenden Welle 5 gekoppelt ist.

Die elektrische Maschine 1 weist einen Spulenträger 6 auf, der in Nuten 7 ein Blechpaket 8 des Stator 2 gesteckt ist, und als ein von einem Kühlfluid in Richtung eines Pfeils 9 durchströmbarer Hohlkörper ausgebildet ist. Die Nuten 7 sind jeweils zwischen zwei Zähnen 10 des Blechpaket 8 ausgebildet, die durch Wandungen 11 begrenzte Durchgangsöffnungen 12 des Spulenträgers 6 durchsetzen. In mehreren Spulenaufnahmeräumen 13 ist jeweils eine Statorspule 14 von mehreren Spulenanordnungen 15 angeordnet. Zwischen zwei Durchgangsöffnung 12 bzw. Statorspulen 14 ist jeweils eine Schottwand 16 des Spulenträgers 6 angeordnet, entlang der das Kühlfluid durch den Spulenträgers 6 strömt, wozu an dessen Stirnseiten mehrere Zuleitungen 17 und Ableitungen 18 angeordnet sind. Außerdem weist der Spulenträgers 6 ebenfalls stirnseitig angeordnete Öffnungen 19 auf, in welchen elektrische Zuführungen für die Spulenanordnungen 15 angeordnet sind. Der Spulenträger 6 ist so gegenüber dem Blechpaket 8 und dem Rotor 3 flüssigkeitsdicht gekapselt.

Fig. 2 zeigt eine perspektivische Darstellung des Stator 2 der elektrischen Maschine 1 mit dem Spulenträger 6. Dieser besteht aus vier ringsegmentförmigen Spulenträgersegmenten 20, die jeweils gegeneinander flüssigkeitsdicht gekapselt sind. Dabei nimmt jedes Spulenträgersegment 20 eine Spulenanordnung 15 auf. Ebenso sind an jedem Spulenträgersegment 20 jeweils die Zuleitung 17, die Ableitung 18 und die Öffnungen 19 für eine jeweilige elektrische Zuleitung vorgesehen.

Ersichtlich durchsetzen die Zähne 10 des Blechpakets 8 jeweils eine Durchgangsöffnung 12 des Spulenträgers 6, so dass jeweils eine Statorspule 14 um einen Zahn 10 angeordnet ist und der durch sie erzeugte magnetische Fluss in Richtung des Rotors 3 geleitet wird. Durch die Aufteilung des Spulenträgers 6 in die Spulenträgersegmente 20 können diese bei der Montage der elektrischen Maschine 1 auf die Zähne 10 gesteckt werden, wozu zwischen den Spulenträgersegmenten 20 vom Umfang des Stator 2 abhängige Freiräume vorgesehen und die Nuten 7 parallelflankig ausgebildet sind. In weiteren Ausführungsbeispielen der elektrischen Maschine 1 können die Zähne 10 in das Blechpaket 8 einsetzbar ausgebildet und an diesem befestigt sein. So können auch Zahngeometrien, auf die die Spulenträgersegmente 20 nicht aufsteckbar sind, wie parallelflankige Zähne oder spezielle Zahnköpfe, realisiert werden.

Des Weiteren besteht das Blechpaket 8 aus vier Blechpaketsegmenten 21, die deckungsgleich mit den Spulenträgersegmenten 6 angeordnet sind. Bei der Montage der elektrischen Maschine 1 können die Spulenträgersegmente 20 zunächst auf das ihnen jeweils zugeordnete Blechpaketsegmente 21 gesteckt werden, wonach dann die Blechpaketsegmente 21 zum Blechpaket 8 durch lösbares oder nicht lösbares Befestigen aneinander zusammengefügt werden. Dadurch kann insbesondere auf den zuvor beschriebenen Freiraum zwischen den Spulenträgersegmente 20 verzichtet werden. In weiteren Ausführungsbeispielen können die Spulenträgersegmente 20 und die Blechpaketsegmente 21 auch in Umfangsrichtung versetzt zueinander angeordnet sein, so dass ein Überlapp entsteht. Ebenso ist es denkbar, dass ein einteiliger Spulenträger 6 verwendet wird, auf den die Blechpaketsegmente 21 bei der Montage der elektrischen Maschine 1 von außen aufgesteckt werden.

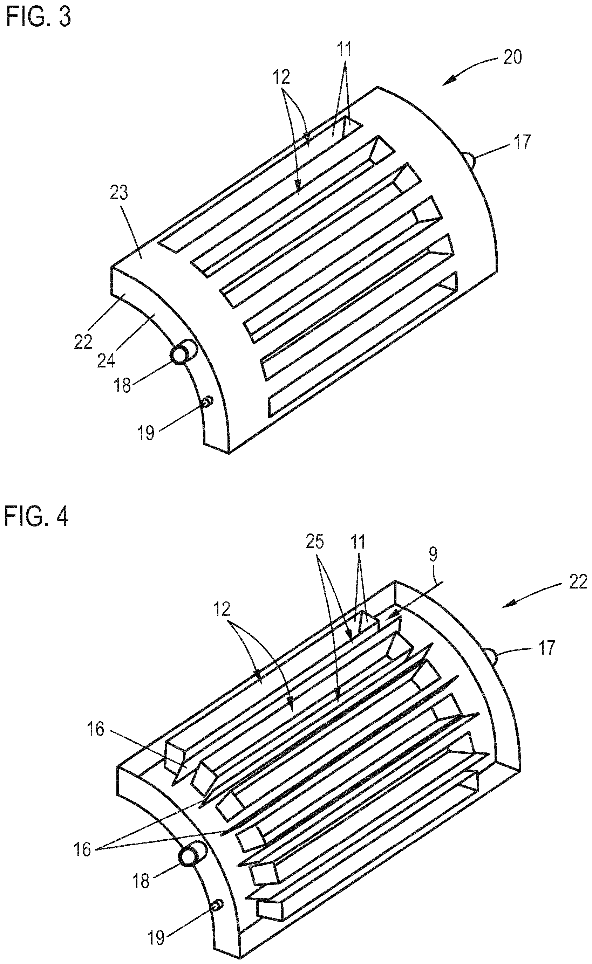

Fig. 3 ist eine perspektivische Darstellung eines Spulenträgersegments 20 der elektrischen Maschine 1. Zu sehen sind hier im Detail die einzelnen Durchgangsöffnung 12, die jeweils an vier Seiten durch die Wandungen 11 begrenzt sind. Es ergibt sich mithin eine Rippenstruktur der Spulenträgersegmente 20, die von den Zähnen 10 durchsetzbar ist.

Das Spulenträgersegment 20 umfasst einen Grundkörper 22 und eine separate Außenwand 23, die sich in axialer und in Umfangsrichtung erstreckt. Diese Zweiteilung ermöglicht ein besonders einfaches Anordnen der Statorspulen 14 durch Einsetzen in den wannenartigen Grundkörper 22, welcher anschließend mittels eines Fügeverfahrens durch die Außenwand 23 abgeschlossen wird. Der Grundkörper 22 und die Außenwand 23 sind aus einem elektrisch isolierenden sowie thermisch und mechanisch besonders beständigen Material, beispielsweise Polyetheretherketon, gebildet. Im Rahmen ihrer Fertigung wird bevorzugt ein Stereolithographieverfahren oder selektives Lasersintern verwendet. Dadurch lassen sich besonders geringe Materialdicken der Wandungen 11, des Grundkörpers 22 und der Außenwand 23 realisieren.

In einem weiteren Ausführungsbeispiel ist anstelle der Außenwand 23 eine stirnseitige Außenwand 24 als separates Teil ausgebildet. Dabei ist die Anordnung der Statorspulen 14 in dem entsprechenden Grundkörper zwar aufwändiger, jedoch ist für das Schließen des Spulenträgersegmente 20 lediglich eine zusammenhängende Fügenaht um die Außenwand 24 herum erforderlich.

Fig. 4 ist eine perspektivische Darstellung des Grundkörpers 22 des in Fig. 3 gezeigten Spulenträgersegments 20. Um die Wandungen 11 jeder Durchgangsöffnung 12 ist ersichtlich jeweils einer der Spulenaufnahmeräume 13 ausgebildet. Zwischen den Durchgangsöffnungen 12 ist ferner jeweils ein Strömungskanal 25 ausgebildet. Die Strömungskanäle 25 sind jeweils durch eine Schottwand 16 in zwei Teilströmungskanäle aufgeteilt, wodurch sich ein geringerer Strömungsquerschnitt für das Kühlfluid und mithin eine verbesserte Wärmeabgabe ergibt. Das in Richtung des Pfeils 9 den Teilströmungskanal durchströmende Kühlfluid läuft zuerst wesentlich später thermisch und hydrodynamisch ein, so dass eine verbesserte Nußelt-Zahl des Strömungsvorgangs erreicht wird.

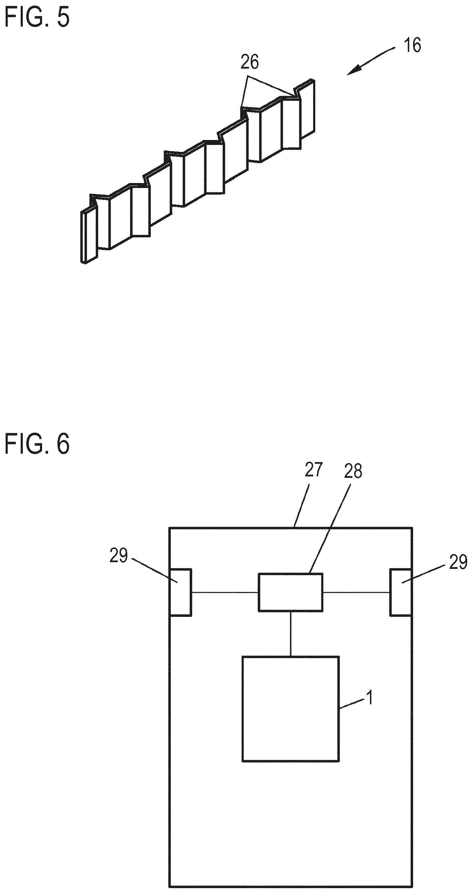

Fig. 5 zeigt eine perspektivische Darstellung einer weiteren Ausgestaltung einer Schottwand 16, welche in axialer Richtung mehrere kerbenartige Strukturen 26 als Mittel zur Erzeugung einer Turbulenz des durchströmenden Kühlfluids aufweist, welches durch dessen gezielte Verwirbelung wird die Wärmeabgabe der Statorspulen 14 an das Kühlfluid weiter verbessert. Daneben sind in weiteren Ausführungsbeispielen auch wellenartige, eingebuchtete oder zickzackförmige Strukturen 26 als Mittel zur Erzeugung der Turbulenz möglich.

Wie bereits erwähnt ist es in weiteren Ausführungsbeispielen einer elektrischen Maschine 1 auch möglich, dass ein einteiliger Spulenträger 6 vorgesehen ist, der einen einzigen in Umfangsrichtung geschlossenen Hohlraum aufweist. Darüber hinaus ist es gemäß einem weiteren Ausführungsbeispiel einer elektrischen Maschine 1 auch möglich, dass ihr Rotor 3 nicht wie in Fig. 1 gezeigt als Innenläufer, sondern als Außenläufer ausgebildet ist.

Fig. 6 zeigt eine Prinzipskizze eines Kraftfahrzeugs 27, umfassend mehrere über einen Triebstrang 28 antreibbare Räder 29 sowie eine elektrische Maschine 1, welche zum zumindest zeitweisen und zumindest unterstützenden Antreiben des Triebstrangs 27 ausgebildet ist.

## Patentansprüche

1. Elektrische Maschine für ein Kraftfahrzeug, umfassend einen Rotor (3) und einen Stator (2) mit einem Blechpaket (8) und wenigstens einer mehrere Statorspulen (14) aufweisenden Spulenanordnung (15),
**dadurch gekennzeichnet,**
**dass** ein von einem Kühlfluid durchströmbarer Spulenträger (6) vorgesehen ist, in welchem die Spulenanordnung (15) angeordnet ist und der gegenüber dem Blechpaket (8) und dem Rotor (3) flüssigkeitsdicht gekapselt ist.

2. Elektrische Maschine nach Anspruch 1,
**dadurch gekennzeichnet,**
**dass** das Blechpaket (8) mehrere Zähne (10) aufweist, wobei der Spulenträger (6) mehrere durch Wandungen (11) begrenzte Durchgangsöffnungen (12) aufweist, welche von den Zähnen (10) durchsetzt sind.

3. Elektrische Maschine nach Anspruch 2,
**dadurch gekennzeichnet,**
**dass** zwischen den Wandungen (11) ausgebildete Strömungskanäle (25) im Inneren des Spulenträgers (6) jeweils in axialer Richtung vom Kühlfluid durchströmbar sind.

4. Elektrische Maschine nach Anspruch 3,
**dadurch gekennzeichnet,**
**dass** wenigstens ein Strömungskanal (25) mittels einer sich in axialer und radialer Richtung erstreckenden Schottwand (16) aufgeteilt ist.

5. Elektrische Maschine nach Anspruch 4,
**dadurch gekennzeichnet,**
**dass** die Schottwand (16) wenigstens ein Mittel zur Erzeugung einer Turbulenz des durchströmenden Kühlfluids aufweist.

6. Elektrische Maschine nach einem der Ansprüche 2 bis 5,
**dadurch gekennzeichnet,**
**dass** die Zähne (10) in das Blechpaket (8) einsetzbar ausgebildet und an diesem befestigt sind.

7. Elektrische Maschine nach einem der vorhergehenden Ansprüche,
**dadurch gekennzeichnet,**
**dass** der Spulenträger (6) eine Zuleitung (17) und eine Ableitung (18) für das Kühlfluid und/oder eine flüssigkeitsdicht abgedichtete Öffnung (19), in welcher eine elektrische Zuführung für die Spulenanordnung (15) angeordnet ist, aufweist.

8. Elektrische Maschine nach einem der vorhergehenden Ansprüche,
**dadurch gekennzeichnet,**
**dass** der Spulenträger (6) mehrere gegeneinander flüssigkeitsdicht gekapselte, ringsegmentförmige Spulenträgersegmente (20) aufweist, in welchen jeweils eine von mehreren vorgesehenen Spulenanordnungen (15) angeordnet ist.

9. Elektrische Maschine nach einem der vorhergehenden Ansprüche,
**dadurch gekennzeichnet,**
**dass** das Blechpaket (8) aus mehreren ringsegmentförmigen Blechpaketsegmenten (21) besteht.

10. Elektrische Maschine nach Anspruch 8 und 9,
**dadurch gekennzeichnet,**
**dass** die Spulenträgersegmente (20) deckungsgleich mit den Blechpaketsegementen (21) oder in Umfangsrichtung versetzt zu den Blechpaketsegmenten (21) am Stator (2) angeordnet sind.

11. Elektrische Maschine nach einem der vorhergehenden Ansprüche,
**dadurch gekennzeichnet,**
**dass** der Spulenträger (6) oder ein jeweiliges Spulenträgersegment (20) mehrteilig mit einer Außenwand (23, 24) und einem zur Seite der Außenwand (23, 24) offenen Grundkörper (22) ausgebildet ist, wobei die Außenwand (23, 24) den Grundkörper (22) abschließt und an diesem befestigt ist.

12. Spulenträger für eine elektrische Maschine nach einem der vorhergehenden Ansprüche,
**dadurch gekennzeichnet,**
**dass** der Spulenträger (6) ein von einem Kühlfluid durchströmbarer Hohlkörper ist, in welchem mehrere Spulenaufnahmeräume (13) zur Anordnung jeweils einer Statorspule (14) einer Spulenanordnung (15) der elektrischen Maschine (1) ausgebildet sind, wobei der Hohlkörper zur flüssigkeitsdichten Kapselung der Spulenanordnung (6) gegenüber einem Blechpaket (8) und einem Rotor (3) der elektrischen Maschine (1) ausgebildet ist.

13. Spulenträger nach Anspruch 12,
**dadurch gekennzeichnet,**
**dass** der Spulenträger (6) mehrere durch Wandungen (11) begrenzte Durchgangsöffnungen (12) aufweist, welche von Zähnen (10) der elektrischen Maschine (1) durchsetzbar sind.

14. Spulenträger nach Anspruch 13,
**dadurch gekennzeichnet**,
zwischen den Wandungen (11) ausgebildete Strömungskanäle (25) im Inneren des Spulenträgers (6) jeweils in axialer Richtung vom Kühlfluid durchströmbar sind.

15. Spulenträger nach Anspruch 14,
**dadurch gekennzeichnet,**
**dass** wenigstens ein Strömungskanal (25) mittels einer sich in axialer und radialer Richtung erstreckenden Schottwand (16) aufgeteilt ist.

16. Spulenträger nach Anspruch 15,
**dadurch gekennzeichnet,**
**dass** die Schottwand (16) wenigstens ein Mittel (26) zur Erzeugung einer Turbulenz des durchströmenden Kühlfluids aufweist.

17. Spulenträger nach einem der Ansprüche 12 bis 16,
**dadurch gekennzeichnet,**
**dass** eine Zuleitung (17) und eine Ableitung (18) für das Kühlfluid und/oder eine flüssigkeitsdicht abgedichtete Öffnung (19), in welcher eine elektrische Zuführung für die Spulenanordnung (15) angeordnenbar ist, vorgesehen sind.

18. Spulenträger nach einem der Ansprüche 12 bis 17,
**dadurch gekennzeichnet,**
**dass** der Spulenträgers (6) mehrteilig mit einer Außenwand (23, 24) und einem zur Seite der Außenwand (23, 24) offenen Grundkörper (22) ausgebildet ist, wobei die Außenwand (23, 24) am Grundkörper (22) befestigbar ist.

19. Kraftfahrzeug, umfassend eine elektrische Maschine nach einem der Ansprüche 1 bis 11.
